# EUROPÄISCHE PATENTANMELDUNG

(11) **EP 4 053 387 A1**
(43) Veröffentlichungstag der Anmeldung: **07.09.2022**
(21) Anmeldenummer: 21160070.5
(22) Anmeldetag: 01.03.2021
(51) Int. Cl.: F02B 33/42, F01N 1/00, F01N 13/18

(54) **ZWEI- ODER DREIRAD MIT VERBRENNUNGSMOTOR**

(71) Anmelder: Hofmann, Arno, 63571 Gelnhausen (DE)
(72) Erfinder: Hofmann, Arno, 63571 Gelnhausen (DE)
(74) Vertreter: Tergau & Walkenhorst Patentanwälte PartGmbB

(57) **Zusammenfassung**

Ein Zwei- oder Dreirad (60) mit einem von einem Verbrennungsmotor (1) antreibbaren Hinterrad (62) und mit einem lenkbaren Vorderrad (64), bei dem der Verbrennungsmotor (1) eine Anzahl von Zylindern (2) umfasst, deren Brennraum (10) jeweils einlassseitig über ein ansteuerbares Einlassventilsystem (16) mit einem Gaseinlasssystem (14) und auslassseitig über ein ansteuerbares Auslassventilsystem (22) sowohl mit einer Auspuffanlage (12) als auch über eine Zweigleitung (30) mit der Primärseite einer sekundärseitig in das Gaseinlasssystem (14) geschalteten Abgasladepumpe (32) verbunden ist, soll die Nutzung der Vorteile der Abgasladepumpe (32) insbesondere beim wirkungsgradsteigernden Einsatz für einen Verbrennungsmotor (1) ermöglichen, ohne dass hierfür nennenswerte betriebliche Nachteile in Kauf genommen werden müssen. Dazu ist die Abgasladepumpe (32) erfindungsgemäß in einem Raumbereich (66) seitlich neben dem Hinterrad (62) positioniert.

## Beschreibung

Die Erfindung bezieht sich auf ein Zwei- oder Dreirad mit einem von einem Verbrennungsmotor antreibbaren Hinterrad und mit mindestens einem lenkbaren Vorderrad, wobei der Verbrennungsmotor eine Anzahl von Zylindern umfasst, deren Brennraum jeweils einlassseitig über ein ansteuerbares Einlassventilsystem mit einem Gaseinlasssystem und auslassseitig über ein ansteuerbares Auslassventilsystem sowohl mit einer Auspuffanlage als auch über eine Zweigleitung mit der Primärseite einer sekundärseitig in das Gaseinlasssystem geschalteten Abgasladepumpe verbunden ist.

Ein mit einer Abgasladepumpe versehener Abgasstrang und dessen mögliche Verwendung in einem Zweirad ist beispielsweise aus den EP 2 846 019 A1, EP 2 846 020 A1, EP 3 061 970 A1 oder EP 3 282 109 A1 bekannt. Bei dem dort jeweils beschriebenen Konzept werden durch den Einsatz einer vorzugsweise als Membranpumpe ausgeführten Abgasladepumpe im Abgasstrang eines Verbrennungsmotors dessen Wirkungsgrad, Leistungsabgabe und/oder Effizienz deutlich gesteigert. Die Offenbarung dieser Anmeldungen, insbesondere betreffend die Ausgestaltungen der einzelnen Motorenkonzepte, die Einbindung und Ausgestaltung der als Abgasladepumpe vorgesehenen Membranpumpen sowie die jeweiligen Betriebsweisen, wird ausdrücklich mit einbezogen ("incorporation by reference").

Bei dem aus den genannten Anmeldungen bekannten Konzept erfolgt der Antrieb der Membranpumpe durch Pulsationen bzw. Druckschwankungen eines Antriebsgases, insbesondere des im Abgasstrang des Verbrennungsmotors geführten Abgases, das in die Primärseite der Membranpumpe geleitet wird und seinen Impuls über die Membran auf das in der dem Antriebsgas gegenüberliegenden Sekundärseite der Membranpumpe vorgehaltene Fördergas überträgt. Insbesondere soll die Membranpumpe kurzzeitig auftretende Gaspulsationen des Antriebsgases, so wie sie beispielsweise in Abgasleitungen von Verbrennungsmotoren auftreten, wirkungsvoll in die Kompression von Fördergas umsetzen, wobei das Fördergas in dieser Anwendung vorteilhafterweise die vom Motor für die Verbrennung anzusaugende Frischluft darstellt. Die Membranpumpe arbeitet somit in diesem Konzept als Luftverdichter, der zur Aufladung bzw. zur Wirkungsgradsteigerung des Verbrennungsmotors genutzt werden kann.

Die Membranpumpe weist dabei eine Zuleitung zum Arbeitsraum der Antriebsseite oder Primärseite auf, durch die das Antriebsgas hinein- und herausströmen kann. Die Zuleitung ist dabei eine Stichleitung, in der das Antriebsgas hin und her pulsiert. Auf der Sekundär- oder Fördergasseite befinden sich mindestens ein Zuströmventil, durch das das Fördergas ausschließlich in den Arbeitsraum oder die Sekundärseite von außen einströmen kann, und mindestens ein Abströmventil, durch das das Fördergas ausschließlich aus dem Arbeitsraum ausströmen kann. Zu- und Abströmventil arbeiten dabei jeweils als selbsttätig steuernde Rückschlagventile. Die Membran wird dabei durch Eigenvorspannung und/oder durch eine externe Kraft, wie beispielsweise die einer oder mehrerer Federn, in einer Ruheposition gehalten, die der maximalen Auslenkung der Membran in Richtung der Antriebsseite entspricht, so dass sich in dieser Membranstellung ein maximales Volumen auf der Förder- oder Sekundärseite und ein minimales auf der Antriebs- oder Primärseite ergibt.

Strömt nun eine Druckwelle durch die Zuleitung in den Arbeitsraum der Primärseite der Membranpumpe, so überträgt sie ihre kinetische Energie durch Impulsübertragung bzw. Druckaufbau des Antriebsgases im Arbeitsraum auf die Membran. Die Membran wölbt sich durch den erbrachten Energieeintrag des Antriebsgases und verringert das Volumen des Arbeitsraums der Sekundärseite und somit des Fördergases, bis die Membran an der Innenkontur des Pumpengehäuses anliegt. Dies ist mit einem Druckanstieg des Fördergases auf der Sekundärseite der Membranpumpe verbunden, so dass dieses durch das Abströmventil aus der Membranpumpe ausgeschoben wird. Bei abnehmendem Druck des Antriebsgases drückt die (Feder-)Vorspannung auf die Membran diese wieder in ihre Ruheposition und saugt dabei Fördergas durch das Zuströmventil in die Sekundärseite an. Gleichzeitig wird das Antriebsgas durch die Stichleitung, durch die es zuvor in den Arbeitsraum der Primärseite eingeströmt ist, wieder ausgeschoben. Die Abgassäule wird somit aus der Stichleitung wieder in die eigentliche Abgasleitung zurückgeschoben, und das solchermaßen zurückgeschobene Abgas wird dann über die Abgasleitung dem Auspuffsystem zugeleitet.

Durch dieses Konzept ist auf besonders einfache Weise die Nutzung von Druckpulsen im Abgasstrang des Verbrennungsmotors zur Kompression und/oder Vorverdichtung des Frischgases und damit zur Leistungs- oder Effizienzsteigerung des Verbrennungsmotors ermöglicht. Der Anwendungsbereich dieser Technologie wird vornehmlich für kleine Hubräume bzw. Motoren im Ein- und Zweizylindersegment favorisiert, da in diesen Klassen zurzeit kein die Abgasenergie nutzendes Aufladesystem breite Anwendung zur Effizienzsteigerung findet. Insbesondere wird dabei die Anwendung in Zweirädern mit hohen weltweiten Produktionsstückzahlen favorisiert. Die Komponenten der Abgasladepumpe stellen jedoch zusätzliche Baugruppen in optisch wahrnehmbarer Größe dar, die insbesondere am Zweirad räumlich funktionell und ästhetisch ansprechend integriert werden müssen. Zu berücksichtigen sind hierbei insbesondere die beengten Platzverhältnisse zu benachbarten Fahrzeugteilen und die unvermeidbare Sichtbarkeit der Membranpumpe am Fahrzeug, die bestehende Designansprüche der Fahrzeughersteller unterlaufen kann.

Der Erfindung liegt nunmehr die Aufgabe zu Grunde, ein Zwei- oder Dreirad der oben genannten Art anzugeben, mit dem die genannten Vorteile der Abgasladepumpe insbesondere beim wirkungsgradsteigernden Einsatz für einen Verbrennungsmotor nutzbar gemacht werden können, ohne dass hierfür nennenswerte betriebliche Nachteile in Kauf genommen werden müssen.

Diese Aufgabe wird erfindungsgemäß gelöst, indem die Abgasladepumpe in einem Raumbereich seitlich neben dem Hinterrad, beispielsweise räumlich unterhalb des Rahmenhecks des Fahrzeugs, positioniert ist.

Die Erfindung geht dabei von der Überlegung aus, dass im Hinblick auf die zu erwartende Anpassung der Pumpenvolumina der Membranpumpe an den jeweiligen Motorhubraum gerade in der praktischen Anwendung für Motorhubraumklassen von 50-500ccm mit äußeren Abmessungen der Pumpen im Durchmesser zwischen 150 und 350mm und einhergehend mit axialen Bauhöhen von etwa 30 bis 70mm zu rechnen ist. Dieser funktionsbedingte Bauraumbedarf lässt sich besonders günstig im Bereich des Hinterrads des Fahrzeugs, insbesondere unterhalb des Rahmenhecks des Fahrzeugs, zur Verfügung stellen. Unter "unterhalb" ist hierbei nicht zu verstehen, dass der genannte Raumbereich in Draufsicht auf das Fahrzeug gesehen vollständig vom Rahmenheck überdeckt sein soll; vielmehr ist hiermit gemeint, dass der Raumbereich, den die montierte Abgasladepumpe einnimmt, in Draufsicht auf das Fahrzeug mindestes teilweise vom Rahmenheck, insbesondere einschließlich der darauf üblicherweise montierten Sitzbank, überdeckt wird. Da das Hinterrad einschließlich des Reifens generell schmaler ausgeführt ist als das Fahrzeug in seiner Gesamtbreite, lässt sich die Abgasladepumpe fast immer in diesem Bereich neben dem Hinterrad integrieren, ohne dass Beeinträchtigungen von oder wegen benachbarten Bauteilen in Kauf zu nehmen sind, und vorzugsweise ohne über die Fahrzeugsilhouette hinauszuragen. Unter "neben dem Hinterrad" ist hierbei insbesondere zu verstehen, dass in seitlicher Ansicht gesehen die äußere Kontur der Abgasladepumpe zumindest teilweise mit der äußeren Kontur des Hinterrads überlappt.

In besonders vorteilhafter Ausgestaltung ist die Abgasladepumpe als Membranpumpe der in den vorstehend genannten Druckschriften beschriebenen Art ausgestaltet.

Eine besonders hohe Effizienz der Abgasladepumpe ist erreichbar, indem ihr Arbeitsraum vorteilhafterweise rotationssymmetrisch ausgeführt ist, so dass in den äußeren Abmessungen annähernd eine kreisrunde Bauform in der Art einer flachen Scheibe oder einer Tellerform vorliegt. Im Hinblick auf eine besonders günstige Nutzung des im Hinterradbereich vorhandenen nutzbaren Raumangebots ist dabei die Zentral- oder Mittelachse der Abgasladepumpe in weiterer vorteilhafter Ausgestaltung annähernd parallel zur Achse des Hinterrads ausgerichtet, so dass sich eine Art von "stehender" Positionierung der Membranpumpe ergibt. Diese Positionierung ist dabei besonders bevorzugt bezogen auf das Hinterrad auf der gegenüberliegenden Radseite des Sekundärantriebs vorgesehen, da diese Seite ohne den Sekundärantrieb den größeren Bauraum zur Verfügung stellt. Der Sekundärantrieb stellt hierbei die Kraftübertragung von Motor zum Hinterrad mittels Riemen, Kette oder Kardanwelle etc. dar.

Insbesondere ist die Abgasladepumpe dabei ganz besonders bevorzugt zwischen dem Hinterrad und einem Teil der zum Heck des Fahrzeugs führenden Auspuffanlage positioniert, so dass einerseits eine besonders kompakte und andererseits eine optisch-ästhetisch besonders harmonische Bauweise und Auslegung ermöglicht ist. In ganz besonders bevorzugter Weiterbildung ist dabei die in die Primärseite der Abgasladepumpe mündende Zweigleitung in die Kontur des Endschalldämpfers der Auspuffanlage integriert, so dass eine besonders kompakte und stylistisch ansprechende Bauweise erreichbar ist. Das Ensemble der dabei verwendeten Komponenten, also die Zweig- oder Impulsleitung, die Impulsweiche der Abgasladepumpe, der Abgaskrümmer und der Endschalldämpfer, kann dabei in als eigenständig erfinderischer Ausgestaltung einteilig in der Art eines "Packages" ausgeführt sein.

Gerade bei der besonders bevorzugt vorgesehenen Ausgestaltung der Abgasladepumpe als Membranpumpe ist eine sorgfältige und präzise Führung der Abgasdruckwelle für einen besonders hohen Wirkungsgrad des Gesamtsystems wichtig. Dazu ist die Abgasladepumpe in vorteilhafter Ausgestaltung über eine Anzahl von starren Gasleitungssegmenten mit dem Gaseinlasssystem und dem Auslassventilsystem verbunden. Unter einer "starren" Rohranbindung ist dabei vorliegend eine Rohrverbindung zu verstehen, die keine Radbewegungen bzw. Bewegungen von Fahrwerksteilen kompensieren muss, jedoch explizit Schwingungs- bzw. Dehnungskompensatoren oder elastische Zwischenelemente beinhalten kann, um beispielsweise Wärmedehnungen, mechanische Schwingungen und Montagetoleranzen aufnehmen zu können. Dabei kann in jeweils vorteilhafter Ausgestaltung der Verbrennungsmotor gemeinsam mit der Abgasladepumpe jeweils starr am Fahrzeugrahmen oder starr an der Hinterradschwinge montiert sein.

Bei der "klassischen" Bauweise von Motorrädern werden nämlich Fahrgestell, Motor und Abgasanlage starr miteinander verbunden, d.h. bis auf schwingungstilgende elastische Koppelelemente üben die Baugruppen keine nennenswerten Bewegungen gegeneinander aus. Das Hinterrad dagegen wird bei dieser Bauweise beweglich zum Motor und meist drehbar gelagert. Bei dieser Ausführung der Fahrzeugkonstruktion steht häufig ausreichend Bauraum zur Verfügung, um die Abgasladepumpe in der genannten Art, vorzugsweise "stehend", seitlich neben dem Hinterrad anzuordnen. Um die vorteilhaft vorgesehenen starren Rohrleitungen zwischen Membranpumpe, Abgasanlage und Motor zu ermöglichen, ist es vorteilhaft, die Membranpumpe ebenfalls starr an diesen Baugruppen zu befestigen. Meist stellt die gegenüberliegende Radseite, bezogen auf den Sekundärantrieb des Hinterrads, die vorteilhaftere hinsichtlich des verfügbaren Bauraums dar. Der Großteil der Fahrzeuge dieser Zweiradkategorie weist eine Doppelarmschwingenkonstruktion auf, die maßgeblich eine Einbauposition der Membranpumpe über dem Schwingenarm bedingt. In vorteilhafter Ausgestaltung ist die Membranpumpe in diesem Fall nahe dem Schwingendrehpunkt angeordnet, um möglichst geringen Abstand zur Schwinge beim Einfedern vorhalten zu müssen.

Bei einigen Fahrgestellkonstruktionen eröffnet sich demgegenüber auch die Möglichkeit, die Membranpumpe annähernd liegend oberhalb des Hinterrads, bzw. im Bereich unterhalb der Sitzbank anzuordnen, da die Membranpumpe sehr flach ausgeführt werden kann und ausreichend Abstand zu einem einfedernden Hinterrad möglich ist.

Alternativ zur genannten "klassischen" Bauweise kann die Antriebseinheit auch als so genannte Motor-Triebsatzschwinge ausgeführt sein, wie sie üblicherweise insbesondere für Motorroller zum Einsatz kommt. Für Fahrzeuge mit Motor-Triebsatzschwingen ist die - bevorzugt als Membranpumpe ausgeführte - Abgasladepumpe vorteilhafterweise als ungefederte Masse mit der Motor-Triebsatzschwinge geführt, um starre Rohranbindungen zum Motor und der Abgasanlage zu ermöglichen. Die Membranpumpe ist hierbei vorzugsweise zwischen dem Hinterrad und der Abgasanlage bzw. dem Endschalldämpfer positioniert, da sich der voluminöse Schalldämpfer immer gegenüber der Triebsatzschwinge befindet, die wiederum üblicherweise als Einarmschwinge ausgeführt ist. Dabei kann die Membranpumpe konzentrisch zum Hinterrad oder auch exzentrisch zu diesem angeordnet sein. Die Formgebung des Endschalldämpfers ist in großen Bandbreiten grundsätzlich frei gestaltbar, da die Geräusch dämpfenden Maßnahmen primär von dessen Volumen abhängen und lediglich untergeordnet von dessen Außenkonturen. Im Falle der Positionierung der Abgasladepumpe zwischen Hinterrad und Endschalldämpfer wird es als besonders vorteilhaft angesehen, den Endschalldämpfer zumindest im Bereich der Abgasladepumpe mit einem ovalen Querschnitt zu versehen, um den Endschalldämpfer hinsichtlich der Gesamtbreite des Fahrzeugs schmal ausführen zu können. Die hiermit einhergehende Verringerung der Baubreite des Endschalldämpfers kann durch eine größere Höhe des selbigen kompensiert werden, was gleichzeitig einer weiteren optischen Abschirmung der Abgasladepumpe zugutekommt. Hinsichtlich des Erreichens einer schmalen Baubreite des Endschalldämpfers kann dieser alternativ auch durch zwei übereinander liegende Dämpfereinheiten geringerer Baubreite und Volumens gebildet werden, die entweder parallel oder seriell vom Abgas durchströmt werden und ähnliches Gesamtvolumen gegenüber der einteiligen Ausführung aufweisen.

Die exzentrische Positionierung erlaubt, die Membranpumpe nach oben im Fahrzeug zu verlegen, um Bodenfreiheit zu gewinnen bzw. größere Pumpendurchmesser zu ermöglichen und, falls notwendig, nach vorne im Fahrzeug zu verschieben, um eine kürzere Distanz zum Motor und Schwingendrehpunkt zu erreichen. Der Schalldämpfer, der sich in dieser Anordnung optisch sichtbar seitlich nun vor der Membranpumpe befindet, verdeckt somit die Membranpumpe schon zu einem erheblichen Teil, wobei die verbleibende Sichtbarkeit der Membranpumpe durch entsprechend ausgeführte s.g. Hitzeschutzbleche am Schalldämpfer noch weiter reduziert werden kann.

In alternativer vorteilhafter Ausgestaltung ist die Mittelachse der Abgasladepumpe aber koaxial oder zumindest annähernd koaxial zur Achse des Hinterrads, d. h. insbesondere höchstens 25 cm außermittig versetzt zur Achse des Hinterrads, und somit vorzugsweise parallel zum Hinterrad angeordnet.

Insbesondere kann die Abgasanlage durch die unmittelbare Anordnung der Membranpumpe nahe dem Schalldämpfer effizienter und einfacher gestaltet werden. Zum einen lässt sich die Impulsleitung, die von der Impulsweiche zur Membranpumpe führt und eine funktionelle Rohrlänge von etwa 700-1200mm aufweist, mit ihrem primären Rohrverlauf von der Impulsweiche beginnend, parallel zum Abgaskrümmer verlegen, was eine einteilige preiswerte Herstellung sowie eine vereinfachte Montage der kompletten Abgasanlage erlaubt. Darüber hinaus kann der weitere Rohrverlauf der Impulsleitung optisch in die Abgasanlage als separat verlaufende Rohrleitung integriert werden, beispielsweise als Außenkontur bildender Verlauf des Endschalldämpfers, durch im Endschalldämpfer eingebrachte Vertiefungen in denen die Impulsleitung verlegt wird und/oder ein umschirmendes Hitzeschutzblech. Bei Endschalldämpfern, die aus Blechpressteilen, wie beispielsweise die Halbschalenbauweise, hergestellt werden, ergibt sich sogar die Möglichkeit, die Impulsleitung als gasdicht separate Leitung in die Blechkontur des Schalldämpfers durch entsprechende Formgebung zu integrieren. Bei dieser integrierten Ausgestaltung ist auf den notwendigerweise zu unterdrückenden Wärmefluss vom Endschalldämpfer zu der Impulsleitung zu achten, was formtechnisch durch eine lediglich speichenförmige Verbindung der Impulsleitung mit dem eigentlichen Schalldämpfervolumen erreicht werden kann.

Die Befestigung der Membranpumpe kann sowohl an der Auspuffanlage wie auch am Motor-Triebsatzgehäuse oder an der Radachse erfolgen bzw. kombiniert miteinander ausgeführt sein. Die Ausrichtung, d.h. welche Kammer der Membranpumpe dem Rad bzw. der Abgasanlage zugewandt wird, ist grundsätzlich frei wählbar, jedoch genießt die Ausrichtung des Abgasdeckels zur Radseite hin den Vorteil einer Zwangskühlung durch die sich drehenden Radspeichen.

Vorteilhafterweise ist die Abgasladepumpe des Zweirads als Membranpumpe ausgeführt. Die Membranpumpe umfasst dabei bevorzugt ein Druckgehäuse, dessen Innenvolumen über eine Anzahl von elastisch verformbaren Membranen in eine Mehrzahl von gasseitig voneinander getrennten Teilvolumina aufgeteilt ist, wobei die oder jede Membran derart mit einer Vorspannkraft beaufschlagt ist, dass im drucklosen Zustand das die Primärseite bildende Teilvolumen im Rahmen der Verformbarkeit der oder jeder Membran einen Minimalwert aufweist. Dies ist durch die Verwendung einer bevorzugt vorgesehenen Blattfeder als kompakter Federtyp zu Aufbringung der Vorspannung ermöglicht.

Die mit der Erfindung erzielten Vorteile bestehen insbesondere darin, dass durch die vorgesehene geeignete Positionierung der Abgasladepumpe deren konzeptionelle Vorteile hinsichtlich Effizienz und Wirkungsgrad problemlos im Zweirad nutzbar gemacht werden können, ohne dass hierfür nennenswerte betriebliche Nachteile in Kauf genommen werden müssten. Selbst im Hinblick auf die erwähnten, eigentlich vorhandenen beengten Platzverhältnisse hinsichtlich notwendigem Abstand der Membranpumpe zu Rahmen- und Fahrzeugbauteilen, insbesondere beim Einfedern des Hinterrades bzw. der gesamten Triebsatzeinheit, ist die nun vorgesehene Positionswahl problemlos umsetzbar. Auch die aus Gründen des Kundennutzens gerade bei Motorrollern vorgesehenen Gepäckstauräume und Kraftstoff-Tankkapazitäten müssen nicht zu Gunsten der Membranpumpe schmaler oder kleiner gestaltet werden. Insbesondere der Hauptgepäckstauraum unter der Sitzbank ist in seiner Geometrie bei Motorroller-Fahrzeugen fast immer als Helmablagefach ausgestaltet, und dessen Volumen kann durch die nun vorgesehene Auslegung unverändert beibehalten werden. Darüber hinaus werden durch die vorgesehene Ausgestaltung der Einbausituation die Möglichkeiten geschaffen, auch verhältnismäßig große Membranpumpendurchmesser für Motoren über 125 ccm in das Fahrzeug integrieren zu können. Weiterhin können sowohl die Membranpumpe als auch die abgasführende Impulsleitung großteils nicht sichtbar in das bestehende Fahrzeugdesign integriert werden.

Ein Ausführungsbeispiel der Erfindung wird anhand einer Zeichnung näher erläutert. Darin zeigen:
- FIG. 1: schematisch einen Verbrennungsmotor mit zugeordnetem Abgasstrang,
- FIG. 2: ein als Roller ausgeführtes Zweirad in seitlicher Ansicht,
- FIG. 3: die Hinterradschwinge des Zweirads nach FIG. 2 in seitlicher Ansicht,
- FIG. 4: die Hinterradschwinge nach FIG. 3 in Draufsicht,
- FIG. 5: die Hinterradschwinge nach FIG. 3 in rückseitiger Ansicht,
- FIG. 6: die Hinterradschwinge nach FIG. 3 in seitlicher Ansicht, und
- FIG. 7: eine Hinterradschwinge eines alternativen Zweirads.

Gleiche Teile sind in allen Figuren mit denselben Bezugszeichen versehen.

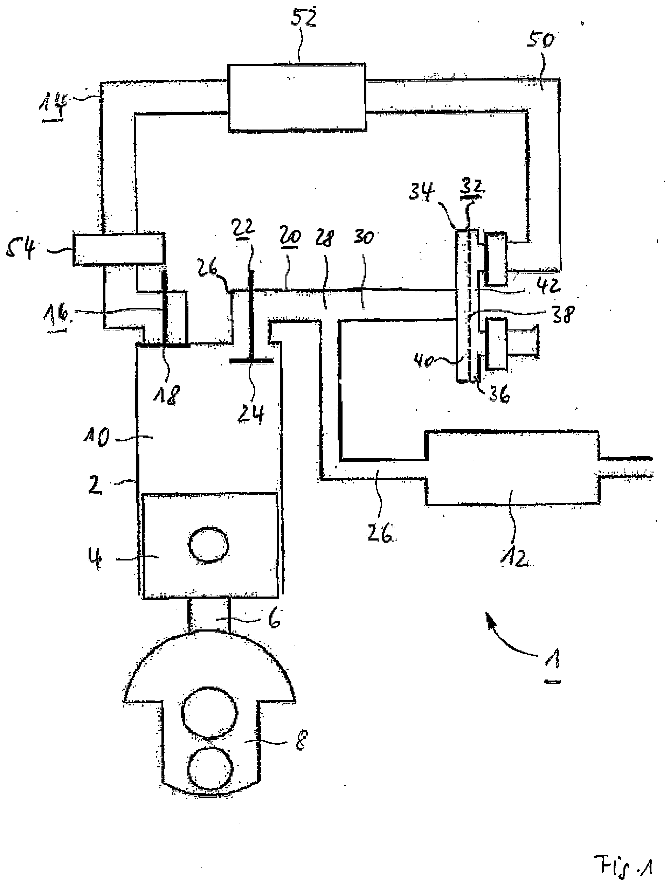

Der in FIG. 1 schematisch dargestellte Verbrennungsmotor 1 ist nach dem 4-TaktVerfahren ausgelegt. Er umfasst eine Anzahl von Zylindern 2, von denen in FIG. 1 lediglich einer dargestellt ist, und in denen jeweils ein Arbeitskolben 4 geführt ist. Der Arbeitskolben 4 wirkt über ein Pleuel 6 auf eine Kurbelwelle 8. Je nach Auslegung und Bauart des Verbrennungsmotors 1 können dabei auch der oder die Arbeitskolben 4 mehrerer oder aller Zylinder 2 auf eine gemeinsame Kurbelwelle 8 wirken.

Innerhalb des Zylinders 2 befindet sich in herkömmlicher Bauweise der Brennraum 10, in dem im Arbeitstakt des Zylinders 2 ein komprimiertes Brennstoff-Luft-Gemisch zur Verbrennung gebracht wird. In Reaktion hierauf führt der im Zylinder 2 verschiebbar angeordnete Arbeitskolben 4 einen Arbeitshub aus, wobei er die Kurbelwelle 8 arbeitsleistend antreibt. Nach der Vollendung des Arbeitshubs, also nach erfolgter Expansion des verbrannten Arbeitsgases im Zylinder 2 und kurz vor Erreichen des so genannten "unteren Totpunkts" (UT), wird das verbrannte Arbeitsgas als Abgas während eines Auslasstakts des Zylinders 2 einer auslassseitig an diesen angeschlossenen Auspuffanlage 12 zugeführt.

Für die zum Betrieb des Zylinders 2 erforderlichen Gaswechsel ist der Brennraum 10 gaseinlassseitig mit einem Gaseinlasssystem 14 und auslassseitig mit der Auspuffanlage 12 verbunden. Zur Steuerung der Gaswechsel im Brennraum 10 ist dabei der Brennraum 10 einerseits gegenüber dem Gaseinlasssystem 14 mittels eines Einlassventilsystems 16 absperrbar, das im Ausführungsbeispiel gem. FIG. 1 als Einlassventil 18 ausgeführt ist. Andererseits ist der Brennraum 10 gegenüber dem zur Auspuffanlage 12 führenden Abgasstrang 20 mittels eines Auslassventilsystems 22 absperrbar, das im Ausführungsbeispiel gem. FIG. 1 als Auslassventil 24 ausgeführt ist.

Der Verbrennungsmotor 1 ist gezielt für eine besonders hohe spezifische Leistungsausbeute und/oder einen besonders hohen Wirkungsgrad und damit geringen spezifischen Kraftstoffverbrauch ausgelegt. Dazu ist vorgesehen, dem aus dem Brennraum 10 während des Auslasstakts des jeweiligen Zylinders 2 abströmenden heißen Abgas zumindest einen Teil der ansonsten eigentlich ungenutzten Abgasenergie zu entziehen, um diese in den Wirkungsgrad steigernder Weise in mechanische Antriebsenergie und/oder Erhöhung der Frischgasluftdichte im Sinne einer Aufladung umzuwandeln. Dies soll erreicht werden, indem der während des Auslasstakts aus dem Brennraum 10 abströmenden Abgasdruckwelle in möglichst weitgehendem Umfang Impuls und/oder Energie entzogen und zur Vorverdichtung des dem Brennraum 10 zuströmenden Frischgases auf dieses übertragen wird.

Um dies zu ermöglichen, ist der Abgasstrang 20 verzweigt ausgeführt. Dabei zweigt von der den Brennraum 10 auslassseitig mit der Auspuffanlage 12 verbindenden Abgasleitung 26 an einer Verzweigungsstelle 28 eine Stichleitung 30 ab. Die Verzweigungsstelle 28 bildet eine Impulsweiche, die eingangsseitig mit dem Auslassventilsystem 22 und ausgangsseitig einerseits über die Stichleitung 30 mit der Primärseite einer als Abgasladepumpe 32 vorgesehenen Membranpumpe und andererseits mit der zur Auspuffanlage 12 führenden Abgasleitung 26 verbunden ist. Der Brennraum 10 ist somit auslassseitig über das Auslassventilsystem 22 und über die Verzweigungsstelle 28 sowohl mit der Auspuffanlage 12 als auch mit der Primärseite der als Membranpumpe ausgeführten Abgasladepumpe 32 verbunden.

Die Membranpumpe 32 ist entsprechend dem in den EP 2 846 019 A1, EP 2 846 020 A1, EP 3 061 970 A1 oder EP 3 282 109 A1 beschriebenen Konzept aufgebaut; die Offenbarung dieser Anmeldungen, insbesondere betreffend die Ausgestaltung der als Abgasladepumpe vorgesehenen Membranpumpen sowie die jeweiligen Betriebsweisen, wird ausdrücklich mit einbezogen ("incorporation by reference"). Die Membranpumpe umfasst ein Druckgehäuse 34, dessen Innenvolumen 36 über eine elastisch verformbare Membran 38 in eine Mehrzahl - im dargestellten Ausführungsbeispiel zwei - von gasseitig voneinander getrennten Teilvolumina 40, 42 aufgeteilt ist.

Das Teilvolumen 40 bildet dabei die Primärseite der Abgasladepumpe 32 und ist gasseitig über die Stichleitung 30 und die Verzweigungsstelle 28 mit dem Auslassventilsystem 22 verbunden, so dass beim Öffnen des Auslassventils 24 die Druckwelle und der Impuls des Abgasstroms über Stichleitung 30 möglichst weitgehend in das die Primärseite bildende Teilvolumen 40 eingeleitet werden. In der Abgasladepumpe 32 trifft der (unmittelbar oder mittelbar eingeleitete) Impuls des Abgasstroms auf die Membran 38 und verformt diese durch Impulsübertragung. Das in der Primärseite der Membranpumpe vorhandene Gas expandiert somit im sich vergrößernden Primärgasvolumen oder Teilvolumen 40 der Membranpumpe 32. Gleichzeitig wird auf der gegenüberliegenden Seite der Membran 38 Frischgas im sich verkleinernden Sekundär- oder Frischgasvolumen oder Teilvolumen 42 der Abgasladepumpe 32 komprimiert.

Durch diese im Ausführungsbeispiel gem. FIG. 1 gezeigte Schaltung ist somit die Nutzung der in der Abgasladepumpe 32 dem Abgas entzogenen Energie zur Kompression und damit Vorspannung eines der Abgasladepumpe 32 sekundärseitig zugeführten Kaltgasstroms ermöglicht. Auslegungsgemäß soll dies zur Vorverdichtung des dem Brennraum 10 des Verbrennungsmotors 1 zugeführten Frischgasstroms genutzt werden. Dementsprechend ist im Ausführungsbeispiel gem. FIG. 1 die Membranpumpe 32 sekundärseitig in eine Frischgasleitung 50 geschaltet, die über einen im Ausführungsbeispiel vorgesehenen, ggf. nicht zwingend notwendigen Ladeluftkühler 52 geführt ist und ausgangsseitig über das Einlassventilsystem 16 mit dem Brennraum 10 des Zylinders 2 absperrbar verbunden ist. In der Abgasladepumpe 32 wird somit die auf der Primärseite in Expansionsarbeit umgewandelte Energie des Abgases in Kompressionsenergie des in der Frischgasleitung 50 auf der Sekundärseite geführten Frischgases umgewandelt.

Später während des Auslasstakts, nach erfolgter Deformation der Membran 38, wird diese durch eine Rückstellkraft wieder in ihre Ausgangslage bewegt und schiebt das Abgas bzw. die in der Stichleitung 30 befindliche Gassäule über die Stichleitung 30 zur Verzweigungsstelle 28 zurück. Von dort gelangt das Abgas in der zweiten Taktphase des Auslasstakts unter Umgehung der Abgasladepumpe 32, also ohne diese zu durchströmen, über die Abgasleitung 26 zur Auspuffanlage 12. Abgasnachbehandlungssysteme, wie beispielsweise Katalysatoren, befinden sich entweder in der Abgasleitung 26 oder / und auch in der Auspuffanlage 12. Ebenso schiebt der Kolben 4 das im Zylinder 2 noch vorhandene Abgas aus diesem über die Abgasleitung 26 in die Auspuffanlage 12. Das Frischgas wird hingegen während der Kompression aus der Membranpumpe 32 durch ein dort vorgesehenes Rückschlagventil in die als Druckspeicherleitung vorgesehene und ausgestaltete Frischgasleitung 50 gedrückt, in der es verweilt, bis das Einlassventil 18 und ein eventuell vorhandenes Zusatzventil 54 sich öffnen. Die Frischgasleitung 50 kann somit als Zwischenspeicher angesehen werden, dem das in der Abgasladepumpe 32 komprimierte Frischgas zugeführt und dort zur Einspeisung in den Brennraum 10 des Zylinders 2 bereitgehalten wird. Die Speicherleitung 50 kann durch Formgebung und Leitungslängen als schwingungsfähiges System ausgelegt werden, um Gasschwingungen auf der Gaseinlassseite 14 zu generieren, wie beispielsweise durch Helmholtzresonanzen hervorgerufen. Wie bei Saugmotoren üblich, werden durch den Zylinderhubraum und die Länge bzw. Querschnitt des Ansaugrohres Resonanzschwingungen in der Ansaugphase Motordrehzahl abhängig angeregt, die zu Füllungssteigerungen des Motorzylinders genutzt werden. Selbige Effekte können ebenfalls in Verbindung mit dem aus der Ladepumpe vorverdichteten Frischgas umgesetzt werden, allerdings auf höherem Druckniveau.

Die Abgasladepumpe 32 ist gezielt für einen besonders hohen Wirkungsgrad bei der Umsetzung des vom durch die Stichleitung 30 in das erste Teilvolumen 40 einströmenden Antriebsgases mitgeführten Impulses oder Druckpulses in eine Bewegung der Membran 38 und demzufolge eine Kompression des im zweiten Teilvolumen 42 vorgehaltenen Frischgases bei besonders hoher Lebensdauer der Komponenten ausgelegt. Dabei ist insbesondere auch berücksichtigt, dass grundsätzlich die bewegten Massen der Membran 38 und der für deren Rückstellung vorgesehenen Feder möglichst gering gehalten werden sollten. Um dies zu ermöglichen, ist insbesondere das Federsystem geeignet ausgestaltet, indem die Feder als Blattfeder ausgeführt ist.

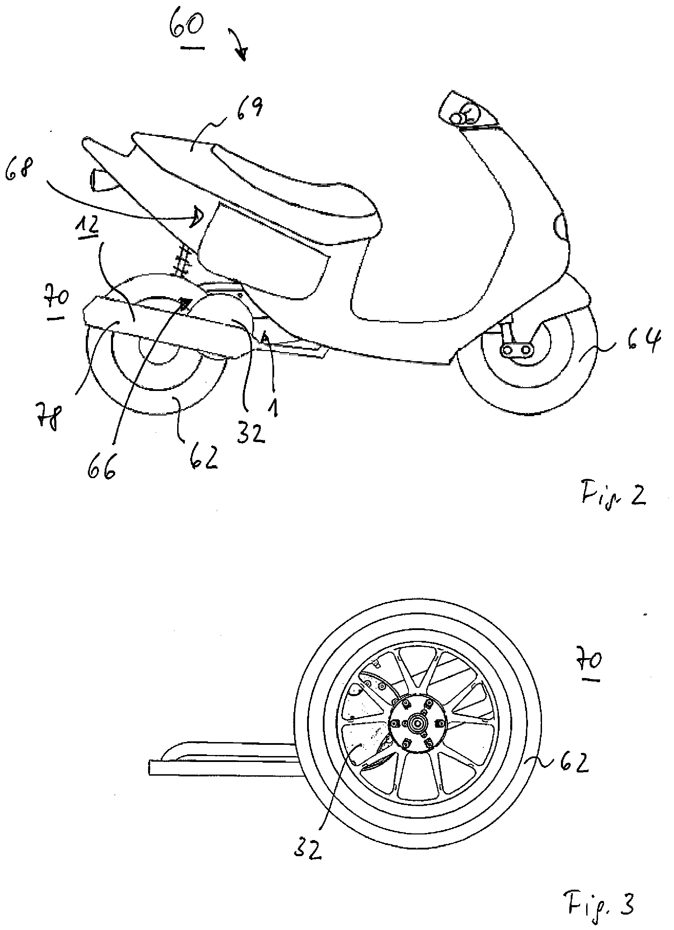

Der in FIG. 1 gezeigte Abgasstrang 20 einschließlich der Membranpumpe 32 eignet sich besonders für die Verwendung in der Art einer Abgasladepumpe 32 zur Aufladung von Ein- und Zweizylinderverbrennungsmotoren, wie sie beispielsweise in Zwei- oder Dreirädern, ATVs, Motorschlitten, Freizeitgeräten, Flugtriebwerken und Stationärmotoren verwendet werden, aber auch für Mehrzylindermotoren im PKW-Bereich, um beispielsweise vorhandene Turbolader zu unterstützen. Vorliegend ist der Abgasstrang 20 aber zum Einsatz in einem Zwei- oder Dreirad vorgesehen. Beispielhaft ist dazu in FIG. 2 ein als Roller ausgeführtes Zweirad 60 gezeigt, dessen Hinterrad 62 von dem Verbrennungsmotor 1 antreibbar ist. Der dargestellte Roller umfasst zudem ein lenkbares Vorderrad 64, wobei alternativ in durchaus gängiger Bauweise auch noch ein weiteres, parallel zum Vorderrad 64 geführtes Vorderrad vorgesehen sein könnte. In dieser Variante wäre der Roller dann als Dreirad ausgelegt.

Das Zweirad 60 ist gezielt für eine besonders weitgehende Nutzung der Vorteile der Abgasladepumpe 32 insbesondere beim wirkungsgradsteigernden Einsatz für den Verbrennungsmotor 1 ausgelegt, ohne dass hierfür nennenswerte betriebliche Nachteile in Kauf genommen werden müssen. Dazu ist vorliegend insbesondere eine besonders geeignete räumliche Positionierung der Abgasladepumpe 32 im bzw. am Fahrzeug 60 vorgesehen. Der funktionsbedingte Bauraumbedarf für die Abgasladepumpe 32 wird im Bereich des Hinterrads 62 des Fahrzeugs 60, in einem Raumbereich 66 neben dem Hinterrad 62 und insbesondere unterhalb des dem Hinterrad 62 zugeordneten Rahmenhecks 68, bereitgestellt. Wie der Darstellung gem. FIG. 2 und auch den nachfolgenden Figuren entnehmbar ist, ist der Raumbereich 66, in dem die Abgasladepumpe 32 positioniert ist, in dem Sinne "unterhalb" des Rahmenhecks 68 vorgesehen, dass er in Draufsicht auf das Fahrzeug 60 mindestes teilweise vom Rahmenheck 68, insbesondere einschließlich der darauf üblicherweise montierten Sitzbank 69, überdeckt wird; eine vollständige Überdeckung durch das Rahmenheck 68 von oben in Draufsicht ist hiermit nicht notwendigerweise gemeint. Unter "neben dem Hinterrad 62" ist hierbei insbesondere zu verstehen, dass in seitlicher Ansicht gesehen, wie in Fig. 2 gezeigt, die äußere Kontur der Abgasladepumpe 32 zumindest teilweise mit der äußeren Kontur des Hinterrads 62 überlappt

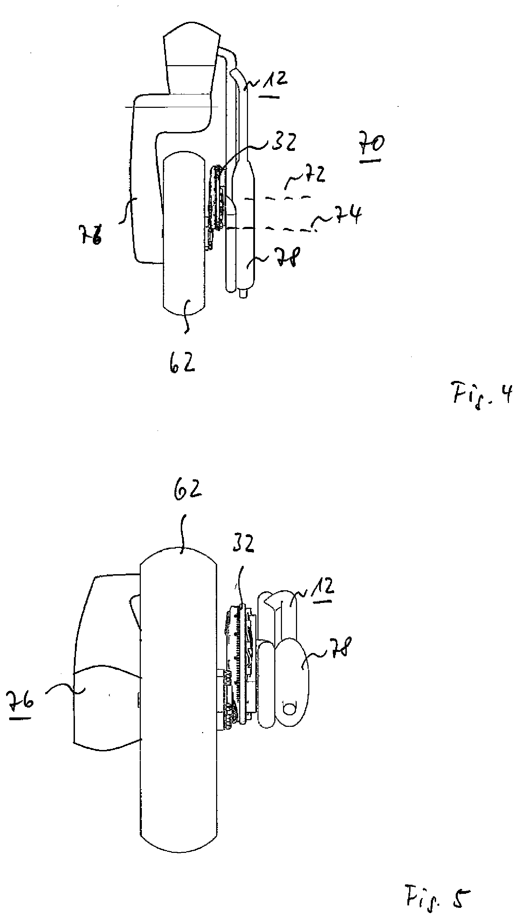

In den FIGs. 3 - 6 ist in der Art einer ausschnittsweisen Vergrößerung die Hinterradschwinge 70 einschließlich zugeordneter Abgasladepumpe 32 aus verschiedenen Blickrichtungen gezeigt, aus denen die nachfolgend erwähnten baulichen Besonderheiten hinsichtlich Positionierung und Beschaffenheit der Abgasladepumpe 32 deutlich werden.

Im Hinblick auf die Ausgestaltung der Abgasladepumpe 32 als Membranpumpe weist diese einen im Wesentlichen rotationssymmetrischen Arbeitsraum auf, so dass sie in ihren äußeren Abmessungen annähernd eine kreisrunde Bauform in der Art einer flachen Scheibe oder einer Tellerform mit einer durch die Linie 72 symbolisierten Zentral- oder Mittelachse aufweist. Diese Zentral- oder Mittelachse der Abgasladepumpe 32 ist im dargestellten Ausführungsbeispiel annähernd parallel zur Achse 74 des Hinterrads 62 ausgerichtet, so dass sich eine Art von "stehender" Positionierung der Membranpumpe 32 ergibt. Wie den Darstellungen weiterhin deutlich entnehmbar ist, ist die Abgasladepumpe 32 zudem bezogen auf das Hinterrad 62 auf der dem Antriebstrang oder Sekundärantrieb 76 des Verbrennungsmotors 1 gegenüberliegenden Radseite des Hinterrads 62 positioniert.

Im gezeigten Ausführungsbeispiel ist die gesamte Antriebseinheit des Rollers 60 als so genannte Triebsatzschwinge ausgeführt, wobei an der Hinterradschwinge 70 sowohl der eigentliche Verbrennungsmotor 1 als auch Nebenkomponenten einschließlich der gesamten Abgasanlage 12 montiert sind. Dabei ist auch die Abgasladepumpe 32 ebenfalls als ungefederte Masse an der Hinterradschwinge 70 montiert, so dass starre Rohranbindungen zum Verbrennungsmotor 1 und der Abgasanlage 12 ermöglicht sind. Die Abgasladepumpe 32 ist dabei in einer besonders platzsparenden Bauweise zwischen dem Hinterrad 62 und dem zum Heck des Fahrzeugs 60 führenden Endschalldämpfer 78 der Auspuffanlage 12 positioniert. Dadurch ist einerseits eine betrieblich besonders zuverlässige und andererseits eine optisch-ästhetisch besonders harmonische Bauweise und Auslegung ermöglicht. Die in die Primärseite der Abgasladepumpe 32 mündende Stichleitung 30 ist dabei in die Kontur des Endschalldämpfers 78 der Auspuffanlage 12 integriert, so dass eine besonders kompakte Bauweise gegeben ist.

Im Ausführungsbeispiel ist die Abgasladepumpe 32 exzentrisch zur Achse 74 des Hinterrads 62 angeordnet. Der Endschalldämpfer 78, der sich in dieser Anordnung optisch sichtbar seitlich vor der Abgasladepumpe 32 befindet, verdeckt diese schon zu einem erheblichen Teil, wobei die verbleibende Sichtbarkeit der Membranpumpe 32 durch entsprechend ausgeführte s.g. Hitzeschutzbleche am Schalldämpfer 78 noch weiter reduziert werden kann. Die Befestigung der Abgasladepumpe 32 kann ganz oder teilweise an der Auspuffanlage 12 und/oder ganz oder teilweise am Gehäuse des Verbrennungsmotors 1 und/oder an der Radachse 74 vorgesehen sein. Die Ausrichtung, d.h. welche Kammer der Membranpumpe 32 dem Hinterrad 62 bzw. der Abgasanlage 12 zugewandt ist, ist grundsätzlich frei wählbar, jedoch genießt die Ausrichtung des Abgasdeckels zur Radseite hin den Vorteil einer Zwangskühlung durch die sich drehenden Radspeichen.

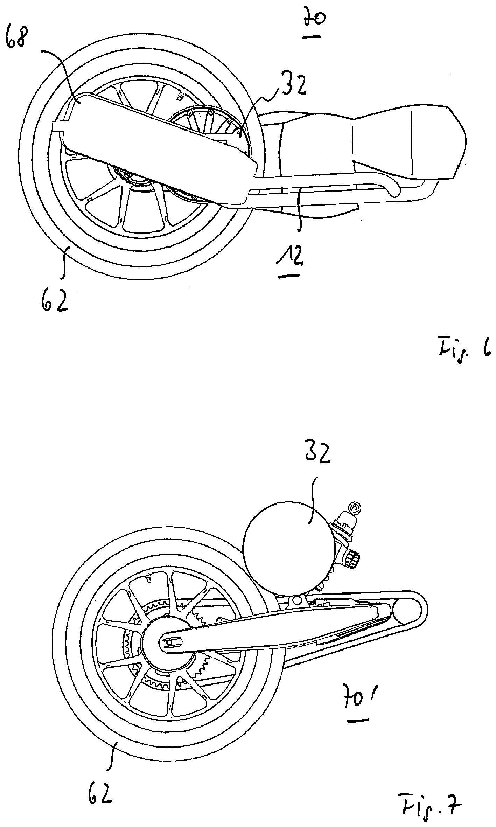

In FIG. 7 ist eine alternative Ausführungsform einer Hinterradschwinge 70' gezeigt, wie sie in einem Zweirad "klassischer" Bauweise, also als Motorrad, zum Einsatz kommen kann. Das Hinterrad 62 ist bei dieser Bauweise an einer Doppelarmschwinge 80 beweglich zum starr am Rahmen montierten Verbrennungsmotor 1 und meist drehbar gelagert. Bei einer solchen Ausführung der Fahrzeugkonstruktion steht häufig ausreichend Bauraum zur Verfügung, um die Abgasladepumpe 32 in der genannten Art seitlich neben dem Hinterrad 62 anzuordnen. Um die vorteilhaft vorgesehenen starren Rohrleitungen zwischen Membranpumpe 32, Abgasanlage 12 und Motor 1 zu ermöglichen, ist in dieser Variante die Membranpumpe 32 ebenfalls starr an diesen Baugruppen befestigt. Dies ist in FIG. 7 durch die gezeigte Einbauposition angedeutet.

### Bezugszeichenliste

- 1: Verbrennungsmotor
- 2: Zylinder
- 4: Arbeitskolben
- 6: Pleuel
- 8: Kurbelwelle
- 10: Brennraum
- 12: Auspuffanlage
- 14: Gaseinlasssystem
- 16: Einlassventilsystem
- 18: Einlassventil
- 20: Abgasstrang
- 22: Auslassventilsystem
- 24: Auslassventil
- 26: Abgasleitung
- 28: Verzweigungsstelle
- 30: Stichleitung
- 32: Abgasladepumpe
- 34: Druckgehäuse
- 36: Innenvolumen
- 38: Membran
- 40, 42: Teilvolumen
- 50: Frischgasleitung
- 52: Ladeluftkühler
- 54: Zusatzventil
- 60: Zweirad
- 62: Hinterrad
- 64: Vorderrad
- 66: Raumbereich
- 68: Rahmenheck
- 69: Sitzbank
- 70: Hinterradschwinge
- 72: Linie
- 74: Achse
- 76: Sekundärantrieb
- 78: Endschalldämpfer
- 80: Doppelarmschwinge
- α: Kegelwinkel

## Patentansprüche

1. Zwei- oder Dreirad (60) mit einem von einem Verbrennungsmotor (1) antreibbaren Hinterrad (62) und mit einem lenkbaren Vorderrad (64), wobei der Verbrennungsmotor (1) eine Anzahl von Zylindern (2) umfasst, deren Brennraum (10) jeweils einlassseitig über ein ansteuerbares Einlassventilsystem (16) mit einem Gaseinlasssystem (14) und auslassseitig über ein ansteuerbares Auslassventilsystem (22) sowohl mit einer Auspuffanlage (12) als auch über eine Zweigleitung (30) mit der Primärseite einer sekundärseitig in das Gaseinlasssystem (14) geschalteten Abgasladepumpe (32) verbunden ist, wobei die Abgasladepumpe (32) in einem Raumbereich (66) unterhalb des Rahmenhecks (68) des Fahrzeugs (60) seitlich neben dem Hinterrad (62) positioniert ist.

2. Zwei- oder Dreirad (60) nach Anspruch 1, bei dem der Arbeitsraum der Abgasladepumpe (32) rotationssymmetrisch ausgeführt ist, wobei die Zentralachse der Abgasladepumpe (32) annähernd parallel zur Achse (74) des Hinterrads (62) ausgerichtet ist.

3. Zwei- oder Dreirad (60) nach Anspruch 1 oder 2, dessen Abgasladepumpe (32) starr mit dem Gaseinlasssystem (14) und dem Abgasstrang (20) verbunden ist.

4. Zwei- oder Dreirad (60) nach einem der Ansprüche 1 bis 3, bei dem die Abgasladepumpe (32) auf der dem Sekundärantrieb gegenüberliegenden Seite des Hinterrads (62) positioniert ist.

5. Zwei- oder Dreirad (60) nach einem der Ansprüche 1 bis 4, bei dem die Abgasladepumpe (32) zwischen dem Hinterrad (62) und einem Teil der zum Heck des Fahrzeugs (60) führenden Auspuffanlage (12) positioniert ist.

6. Zwei- oder Dreirad (60) nach Anspruch 5, bei dem die in die Primärseite der Abgasladepumpe (32) mündende Zweigleitung (30) in die Kontur des Endschalldämpfers (78) der Auspuffanlage (12) integriert ist.

7. Zwei- oder Dreirad (60) nach Anspruch 5 oder 6, bei dem der Endschalldämpfer (78) einteilig mit der in die Primärseite der Abgasladepumpe (32) mündenden Zweigleitung (30) ausgeführt ist.

8. Zwei- oder Dreirad (60) nach einem der Ansprüche 1 bis 7, dessen Verbrennungsmotor (1) ebenso wie die Abgasladepumpe (32) jeweils starr am Fahrzeugrahmen montiert sind.

9. Zwei- oder Dreirad (60) nach einem der Ansprüche 1 bis 8, dessen Verbrennungsmotor (1) ebenso wie die Abgasladepumpe (32) jeweils starr an der Hinterradschwinge (70) montiert sind.

10. Zwei- oder Dreirad (60) nach Anspruch 9, bei dem die Mittelachse (72) der Abgasladepumpe (32) höchstens 25 cm außermittig versetzt zur Achse (74) des Hinterrads (62), vorzugsweise koaxial zur Achse (74) des Hinterrads (62), angeordnet ist.

11. Zwei- oder Dreirad (60) nach einem der Ansprüche 1 bis 10, dessen Abgasladepumpe (32) als Membranpumpe (32) mit einem Druckgehäuse (34) ausgeführt ist, dessen Innenvolumen (36) über eine Anzahl von elastisch verformbaren Membranen (38) in eine Mehrzahl von gasseitig voneinander getrennten Teilvolumina (40,42) aufgeteilt ist.

12. Zwei- oder Dreirad (60) nach Anspruch 11, bei dem die oder jede Membran (38) derart mit einer Vorspannkraft beaufschlagt ist, dass im drucklosen Zustand das die Primärseite bildende Teilvolumen (40) im Rahmen der Verformbarkeit der oder jeder Membran (38) einen Minimalwert aufweist, und wobei zur Aufbringung der Vorspannkraft auf die Membran (38) eine Blattfeder als Rückstellfeder vorgesehen ist.
